# EUROPEAN PATENT APPLICATION

(11) **EP 2 816 102 A1**
(43) Date of publication of application: **24.12.2014**
(21) Application number: 13172517.8
(22) Date of filing: 18.06.2013
(51) Int. Cl.: C12G 3/02, C12G 3/04, C12C 5/02, C12C 11/11, C12C 12/00

(54) **Method for preparing a fermented beverage and beverage thus produced**

(71) Applicant: Anheuser-Busch InBev S.A., 1000 Brussels (BE)
(72) Inventor: Daenen, Luk, 1000 Brussels (BE); Malcorps, Philippe, 1000 Brussels (BE)
(74) Representative: BiiP cvba

(57) **Abstract**

The present invention concerns a process for the production of a beverage (21) said process comprising the following steps:
(a) contacting a base liquor (1) containing at least one fermentable sugar with a yeast (2) of the species *Pichia,* to carry out fermentation under aerobic conditions of said at least one fermentable sugar until an ethanol containing concentrated precursor (11) is formed, comprising an amount of isoamyl acetate (IAAT) of at least 10 ppm, or an amount of ethyl acetate of at least 90 ppm, wherein, unless otherwise indicated, the amounts in ppm are expressed with respect to the total weight of the concentrated precursor;
(b) blending the thus obtained concentrated precursor as such (11) or after further treatment (11a), with more than 50 vol/% of a dilution liquor (12) to produce said beverage (21) having an IAAT content of at least 0.5 ppm with respect to the total weight of the beverage.

## Description

### TECHNICAL FIELD

The present invention concerns a method for producing a fermented beverage by production of a concentrated precursor to be diluted with a dilution liquor to obtain a target beverage. The target beverage is preferably a beer or malt based beverage, or a cider. The concentrated precursor is obtained by fermentation in presence of yeast of the species *Pichia.*

### BACKGROUND OF THE INVENTION

Beer and fermented malt based beverages in general are produced by addition of yeast to a wort to drive the fermentation thereof. Fermentation is the conversion of carbohydrates to alcohols and carbon dioxide, organic acids, or esters. Fermentation is usually, but not necessarily, carried out in anaerobic conditions.

Brewing yeasts may be classed as "top-cropping" (or "top-fermenting") and "bottom-cropping" (or "bottom-fermenting"). Top-cropping yeasts are so called because they form a foam at the top of the wort during fermentation. They can produce higher alcohol concentrations and at higher temperatures, typically 16 to 24 °C, often produce fruitier, sweeter beers. An example of a top-cropping yeast is *Saccharomyces cerevisiae.* Bottom-cropping yeasts are typically used to produce cool fermented, lager-type beers, though they can also ferment at higher temperatures if kept under 34 °C. These yeasts typically ferment more sugars, creating a dryer beer, and grow well at low temperatures. An example of bottom-cropping yeast is *Saccharomyces pastorianus* (or *Saccharomyces carlsbergensis*) (cf. http://en.wikipedia.org/wiki/Beer_fermentation#Fermenting).

Yeast of genus *Saccharomyces* is also sometimes called in brewing circles, "conventional yeast," or even "brewer's yeast" because it is the most widely used yeast in beer brewing. Subject to national regulations, a fermented malt based beverage may or may not be called "beer", depending in particular on whether such denomination requires the use of brewer's yeast or not *(= Saccharomyces* yeast). In the present context, the term "beer" is construed according to a rather broad definition dating from 1974:
*"the drink obtained by fermenting from a wort, prepared with starchy or sugary raw materials, including hop powder or hop extracts and drinkable water. Aside from barley malt and wheat malt, only the following may be considered for brewing, mixed with hop malt or wheat malt, starchy or sugary raw materials in which the total quantity may not exceed 40% of the total weight of the starchy or sugary raw materials:*
   *(a) maize, rice, sugar, wheat, barley and the various forms of them.*
   (*b*) *saccharose, converted sugar, dextrose and glucose syrup.*
Although according to some national legislation, all fermented malt based beverages cannot be called beer, in the context of the present invention, the expressions "*beer*" and "*fermented malt based beverage*" are used herein as synonyms and can be interchanged.

The raw materials and, in particular, the yeast used for the fermentation determine the flavours profile characterizing a beer. Brewers actively explore routes for broadening the flavours profiles of beers. For example, in many specialty beers in Belgium a yeast strain may be added to the finished beer to initiate "refermentation." *Brettanomyces* yeast, a non-*Saccharomyces* yeast is often used for flavour modulation in a refermentation step of a beer initially fermented with a *Saccharomyces* yeast (cf. Vanderaeghen et al., Appl Microbiol Biotechnol (2003) 62:140-150).

It has also be proposed, e.g. in WO200015757, EP1308501 to genetically modify *Saccharomyces* yeast to favour the formation of some esters to detriment of others. Such modified yeast may be used alone or in combination with unmodified *Saccharomyces* yeast. In the specific field of low-alcohol content beers, GB1384309 proposes to yield a flavours profile close to alcoholic beers, by fermenting the wort aerobically, such that no or little alcohol is formed during fermentation.

*Non-Saccharomyces* yeasts are widely used in fermentation processes of beverages, such as wine (cf. WO201178642, US2011045140, Viana et al, Food microbiology, 25, (6) (2008), p.778, or Rojas et al, Food Science and Biotechnology in Developing Countries, FSB1 - 2004 (p.?)), fruit juices (cf. WO2012066176), cocoa (cf. EP2325295). Beer is also mentioned in WO201178642, US2011045140, without specifying any detail. Examples of non-*Saccharomyces* yeasts comprise *Candida, Kloeckera, Pichia, Debaryomyces, Hanseniaspora, Hansenula, Kluyveromyces, Metschnikowia, Saccharomycodes, Schizosaccharomyces, Zygosaccharomyces, Brettanomyces, Rhodotorula, Cryptococcus, Williopsis* and the like. In particular, *Pichia kluyveri* is detected on grapes for wine making, in spontaneous fermentation of sorghum beer, in cocoa fermentations, olive fermentation and during tequila making.

JP2006197840 discloses an alcoholic sake produced by using a Saccharomyces cerevisiae yeast and a *Pichia anomala* previously subjected to mutation treatment by ethidium bromide and to selective separation on an YPDG culture medium to provide a variant in which film-forming ability is lowered. The flavour components of the thus obtained alcoholic sake are described as being "abundant". Similarly, US20110045140 discloses that two novel strains of *Pichia kluyveri* act synergistically with commercially available yeast strains to produce elevated levels of volatile thiols in wine fermentation cultures.

Non-saccharomyces yeast species such as *Williopsis* (Hansenula) and *Pichia* were also tested in combination with *Saccharomyces* to increase ester levels during wine and beer fermentations or for low-alcohol wine production. For example, WO2013/030398 discloses a method for brewing beer by first fermenting a hopped wort in presence of a *Pichia* yeast, followed by fermenting the hopped wort with a second yeast of the species *Saccharomyces* or *Brettanomyces*.Such non-Saccharomyces yeasts are also considered for production of isoamylacetate, characterized by a banana flavour. For example, yeasts *Williopsis mrakii* and *Williopsis saturnus* are known to produce significant higher levels of isoamyl acetate than *Saccharomyces cerevisiae.* It was described for production of banana flavour or use in low alcohol wines.

The present invention provides a method for producing beer, cider, or a fermented malt based beverage, opening the door to totally new fields in flavours profiles thus obtainable, applicable to both alcoholic and non-alcoholic beverages. This and other advantages of the present invention are presented in continuation.

### SUMMARY OF THE INVENTION

The present invention is defined in the appended independent claims. Preferred embodiments are defined in the dependent claims. In particular, the present invention concerns a process for the production of a beverage, said process comprising the following steps:
(a) contacting a base liquor containing at least one fermentable sugar with a yeast of the species *Pichia,* to carry out fermentation under aerobic conditions of said at least one fermentable sugar until a concentrated precursor is formed, comprising an amount of isoamyl acetate (IAAT) of at least 10 ppm, preferably at least 25 ppm or an amount of ethyl acetate of at least 90 ppm, wherein, unless otherwise indicated, the amounts in ppm are expressed with respect to the total weight of the concentrated precursor;
(b) blending the thus obtained concentrated precursor as such or after further treatment, with more than 50 vol/% of a dilution liquor to produce said beverage having an IAAT content of at least 0.5 ppm with respect to the total weight of the beverage.

The term "*liquor*" is herein given the definition of Oxford dictionary: "*a liquid produced or used in a process, in particular, [...] water used in brewing*" (cf. http://oxforddictionaries.com/definition/english/liquor). The at least one fermentable sugar preferably comprises glucose, fructose, galactose, and/or one or more oligo- or polysaccharides, Oligosaccharides are defined as composed of several monosccharide residues joined through glycosidic linkage, which can be hydrolyzed by acid to give the constituent monosaccharide units (or glucose). It is generally agreed that a carbohydrate consisting of two to ten monosaccharide residues with a defined structure is an oligosaccharide. Examples of oligosaccharides suitable for the present invention comprise, maltose, lactose, sucrose, or maltotriose. As polysaccharides, starch and beta-glucans are considered. In the present invention, it is preferred that all or part of the oligosaccharides used is converted into glucose in step (a).

The wort can be hopped or unhopped. When hops are added into the wort, esterification of compounds with an alcohol or thiol group is also expected to be induced. The corresponding acetate esters have usually significant lower flavour perception thresholds. It was found that *Pichia* yeasts and, in particular, *Pichia kluyveri* can be used to achieve this increased esterificiation.

In a preferred embodiment, the base liquor comprises a wort and the beverage obtained after blending in step (b) is an alcoholic or non-alcoholic beer or malt base beverage. Alternatively, the base liquor comprises apple juice or apple extracts, and the beverage obtained after blending in step (b) is cider.

The concentrated precursor obtained at the end of step (a) preferably comprises isoamyl acetate in an amount of at least 5 ppm per vol.% ethanol (=ppm / %ABV), preferably in an amount comprised between 6 and 40 ppm / %ABV, more preferably between 8 and 30 ppm / %ABV, most preferably between 10 and 25 ppm / %ABV In a most preferred embodiment, said concentrated precursor comprises:
(a) Ethyl acetate in an amount comprised between 35 and 500 ppm / %ABV, preferably between 45 and 250 ppm / %ABV, and and/or
(b) Phenyl ethyl acetate in an amount comprised between 8 and 15 ppm / %ABV, preferably between 10 and 14 ppm / %ABV, and/or
(c) Ethanol in an amount comprised between 0,05 and 15 vol.%, preferably between 2 and 10 vol.%, more preferably between 4 and 7 vol.%.

The fermentation in step (a) must be carried in aerobic conditions meaning that an oxygen containing gas must be supplied to the fermenting liquor; an open vat is not considered as sufficient to ensure aerobic fermentation conditions to the liquor, as only a thin surface layer would be exposed to air. In the present invention, aerobic conditions are created by shaking or stirring vigorously the liquor in presence of air and/or feeding an oxygen containing gas (preferably air) to the liquor at a given flow rate. Preferably, the flow rate provides at least 0.00001 dm³ O₂ / dm³_{liquor} / min, more preferably the flow rate provides an oxygen feed comprised between 0.001 dm³ O₂ / dm³_{liquor} / min, and 10 dm³ O₂ / dm³_{liquor} / min. Preferably, fermentation is carried out under stirred conditions caused by the gas flow or by additional mechanical agitation

The yeast of the species *Pichia* used in fermentation step (a) is preferably selected from the group of *Pichia kluyveri, Pichia anomala,* and *Pichia fermentans.* A blend of more than one yeasts of species *Pichia* can be used, but whether single or blended, it is preferred that *Pichia kluyveri* be used

In the present invention, the concentrated precursor obtained in step (a) has too strong a flavours profile to be drinkable as such, with high amounts of esters and other flavouring compounds. It must be used with a dilution liquor to provide a more pronounced flavours profile to said dilution liquor of flatter flavours profile, or to further enhance the flavours profile of said dilution liquor. The dilution liquor may be water, an alcoholic or non-alcoholic beer, cider or malt based beverage comprising relatively less flavouring compounds. The blending with the concentrated precursor allows modulation of the flavours profile of the final beverage obtained after blending. The concentrated precursor can be added to the dilution liquor in an amount comprised between 0.1 and 49 vol.%, preferably between 0.3 and 30 vol.%, more preferably between 0,4 and 15 vol.%, most preferably between 0,5 and 6 vol.%. The concentrated precursor may be blended with a fully formed dilution liquor. Alternatively, the concentrated precursor may be blended to a dilution liquor during the production stage of the latter. In particular, if the dilution liquor is a beer or a cider, the concentrated precursor can be blended witht the dilution liquor during any stage of the preparation of the latter, such as during a fermentation stage, a maturation stage, before or after a filtration stage of a beer or cider or malt based beverage.

The present invention also concerns a concentrated precursor obtained by step (a) of a process as defined supra, which comprises an amount of isoamyl acetate in an amount of at least 10 ppm. Preferably, the content of isoamyl acetate with respect to ethanol content is comprised between 5 and 40 ppm per vol.% ethanol (= ppm / %ABV), more preferably between 8 and 30 ppm / %ABV, most preferably between 10 and 25 ppm / %ABV. In a most preferred embodiment, said concentrated precursor comprises:
(a) Ethyl acetate in an amount comprised between 35 and 500 ppm / %ABV, preferably between 45 and 250 ppm / %ABV, and and/or
(b) Phenyl ethyl acetate in an amount comprised between 8 and 15 ppm / %ABV, preferably between 10 and 14 ppm / %ABV, and/or
(c) Ethanol in an amount comprised between 0,05 and 15 vol.%, preferably between 2 and 10 vol.%, more preferably between 4 and 7 vol.%.

The present invention also concerns a beverage obtained by blending a concentrated precursor with a dilution liquor as defined in step (b) of a process as defined supra. The beverage of the present invention can be an alcoholic or non-alcoholic beer, malt base beverage or cider. It preferably comprises:
(a) Between 0.05- 15.00 ppm isoamyl acetate, preferably between 1.0 and 5.0 ppm, and/or
(b) Between 5.0 and 180.0 ppm ethyl actetate, preferably between 10.0 and 100.0 .0 ppm, and/or
(c) Between 0.3 and 7.0 phenyl ethyl acetate, preferably between 1.0 and 5.0 ppm, and/or
(d) Between 0.01 and 13.0 vol.% ethanol, preferably between 0.03 and 9.0 vol.%.

### Brief description of the Figures

For a fuller understanding of the nature of the present invention, reference is made to the following detailed description taken in conjunction with the accompanying drawings in which:
**Figure 1****:** shows a block diagram of (a) a process according to the present invention and (b) a preferred embodiment with distillation of the concentrated precursor prior to blending.
**Figure 2****:** shows the apparent extract as a function of fermentation time of the concentrated precursors for different *Pichia* yeasts.
**Figure 3****:** shows flavours profiles of the concentrated precursors for the different *Pichia* yeasts of Figure 2.
**Figure 4****:** shows the concentrations in a variety of flavouring compounds of the concentrated precursors for the different *Pichia* yeasts of Figure 2.
**Figure 5****:** shows flavours profiles of a concentrated precursor, a dilution liquor, and two beverage blends of target ethanol contents of 0.5 and 1.0%ABV.
**Figure 6****:** shows the influence of oxygen feed during fermentation on the yield of IAAT and ETAT

### DEATAILED DESCRIPTION OF THE INVENTION

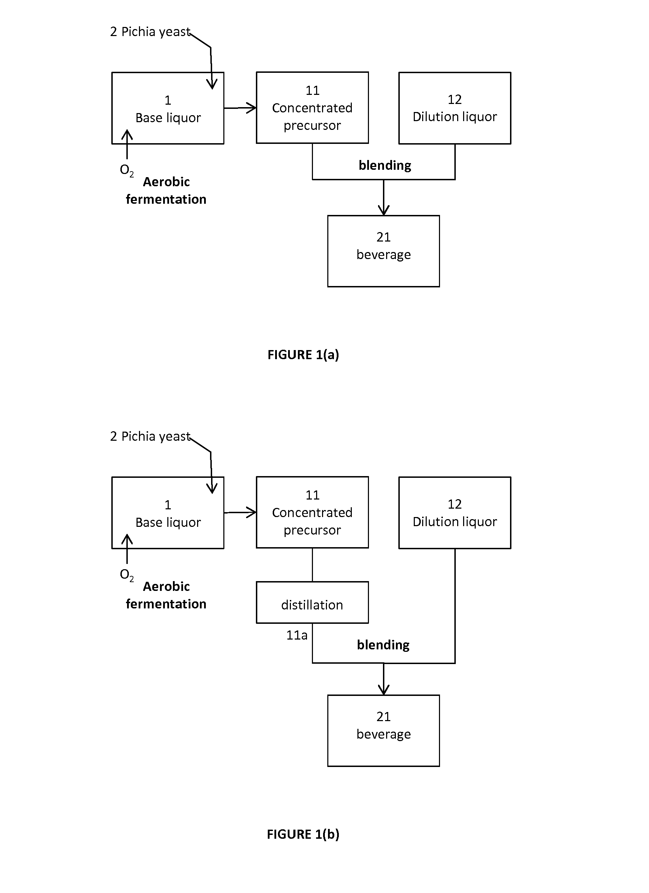

As illustrated in Figure 1(a) the process of the present invention comprises fermenting a base liquor (1) to form a concentrated precursor (11), which can be diluted with a dilution liquor (12) to yield a beverage (21). The base liquor (1) must contain at least one fermentable sugar, such as glucose, fructose, or galactose, preferably glucose. The base liquor is preferably a wort as conventionally used in brewery, or a liquor containing apple juice or apple extracts. In the former case, a beer or beer-like concentrated precursor can be obtained at the end of the process. In the latter case, a cider concentrated precursor can be formed. A mixture of wort and apple based base liquor would yield a mixed beer-cider concentrated precursor. If the base liquor is a wort, it can advantageously be provided with hop. Instead of or together with glucose, the at least one fermentable sugar may comprise one or a mixture of oligosacharides selected from the group of sucrose, or maltotriose. It is preferred that some of the oligosaccharides used, preferably at least 20 wt.%, more preferably at least 50 wt.%, most preferably at least 90 wt.% thereof, be converted into glucose before or during step (a). This can be achieved with enzymes well known in the art, such as alpha-amylase, amyloglucosidase, and/or pullulanase. Attenuzyme® flex is an enzyme mixture available from Novozymes and combining the foregoing three activities. A wort based base liquor (1) can be any traditional wort used in breweries and may comprise additives known in the art, with addition of sugars as discussed supra, yeast nutrient, and/or zinc ions. An example of base liquor (1) may comprise about 50 to 100 g/l of malt extract about the same amount of sugar, in particular glucose, anabout 100 to 500 ppb of Zn²⁺. It is preferred that the free amino nitrogen (= FAN) of the wort ranges from 50 ppm to 400 ppm, preferably between 80ppm and 300ppm (cf. see also Table 2)

Fermentation must be carried out in presence of a yeast of the species *Pichia.* The *Pichia* yeast is preferably of the genus *Pichia kluyveri, Pichia anomalia, Pichia pastoris* or *Pichia fermentans.* The most preferred yeast is *Pichia kluyveri.* Mixtures of different types of the foregoing *Pichia* yeasts can be used to control and optimize the flavours profile of the thus obtained concentrated precursor. Such yeasts can be obtained from the Belgian Coordinated Collections of Microorganisms (BCCM) in the catalogue MUCL (Micro-organismes de l'Université Catholique de Louvain) (cf. http://bccm.belspo.be/db/mucl_search_form.php). Examples of *Pichia* yeasts from the MUCL catalogue suitable for the present invention include, but are not limited to, MUCL 31933 (*Pichia kluyveri*), MUCL 51789 (*Pichia kluyveri*), MUCL 45826 (*Pichia kluyveri*), MUCL 31933 *(Pichia kluyveri*), MUCL 40657 *(Pichia kluyveri*), MUCL 29040 (*Pichia anomala*)*,* MUCL 51792 (*Pichia fermentans*).

The fermentation step (a) preferably consists of a single fermentation step. A single fermentation step is normally sufficient -and preferred- to form the concentrated liquor (11). Alternatively it may be a mixed or sequential fermentation with at least two yeasts, including one yeast of the *Pichia* species, in particular a Pichia kluiveri yeast. Fermentation can be carried out between 10 °C and 37 °C, preferably between 15 °C and 25 °C. and more preferably at room temperature. In order to achieve sufficient transformation of the fermentable sugars into corresponding alcohols and esters, the fermentation step may be carried out over at least 24 h, preferably at least 48 h, more preferably at least 72 h, most preferably at least 80h. Unlike in most fermentation processes, in particular in breweries, fermentation of the base liquor must be carried out under aerobic conditions, with feeding of an O₂ containing gas, typically air. The flow rate of air, expressed in terms of O₂ supply, may be at least 0.00001 dm³ O₂ / dm³_{liquor} / min, more preferably the flow rate provides an oxygen feed comprised between 0.001 dm³ O₂ / dm³_{liquor} / min, and 10 dm3 O₂ / dm³_{liquor} / min. In case of air, containing about 20% oxygen, the air flow rates should be five times the foregoing values.The fermenting liquor is preferably stirred during fermentation to (1) avoid yeast film formation and (2) to ensure good migration of all the components present in the liquor, yeast and oxygen. Stirring the wort during fermentation improves the yield of the process. Stirring can be performed mechanically or generated by a gas flow.

The fermentation conditions, such as the amount of yeast used and fermentation time must be controlled such as to yield a concentrated precursor (11) containing at least 10 ppm isoamyl acetate (IAAT) with respect to the total weight of the concentrated precursor. The ethanol content after fermentation may vary depending on the amount and type of fermentable sugars present in the base liquor (1). The ethanol content in the concentrated precursor (11) Is preferably comprised between 0,5 and 8 vol.%, preferably between 2 and 7 vol.%, more preferably between 4 and 6.5 vol.%. Since the extent of dilution of the concentrated precursor in step (b) of the present invention will often be aiming at reaching a given amount of ethanol content in the final beverage (21), it is advantageous to express the amounts of esters and higher alcohols (i.e., having a higher molecular weight than ethanol), in terms of ppm per vol.% ethanol, referred to as ppm / %ABV. The content of IAAT with respect to ethanol content in the concentrated precursor is preferably comprised between 5 and 40 ppm / %ABV, preferably between 8 and 30 ppm / %ABV, more preferably between 10 and 25 ppm / %ABV.

In a n embodiment of the present invention, the concentrated precursor obtained in step (a) of the present process can be further treated. In particular, as illustrated in Figure 1 (b), the concentrated precursor (11) can be distilled to recover a distillate (11a) rich in particular flavours. Said distillate (11 a) can be blended with a dilution liquor (12) to yield a beverage with a target flavours profile.

The flavours profile of a beverage is a kind of fingerprint of said beverage and is defined by the contents of a number of flavouring compounds including esters and higher alcohols. A beverage like beer is very complex and comprises a great number of types of such esters and higher alcohols and a flavours profile can be very complex. Some flavour compounds, however, are dominating, and a good definition of the flavours profile of a beverage can be obtained with the contents of only but a selection of such dominating flavouring compounds. This is certainly the case of isoamyl acetate (IAAT) already discussed above, but it also concerns ethyl acetate (ETAT) and in some cases for phenyl ethyl acetate (PEAT). Beside ethanol, higher alcohols contribute substantially to the flavours profile of a beverage, such as isoamyl alcohol (IAOH), propanol (PPOH) and isobutanol (iBOH). It is preferred that the concentrated precursor (11) comprises ethyl acetate (ETAT) in an amount comprised between 35 and 500 ppm / %ABV, preferably between 45 and 250 ppm / %ABV more preferably between 50 and 180 ppm / %ABV, and/or phenyl ethyl acetate (PEAT) in an amount comprised between 8 and 15 ppm / %ABV, preferably between 10 and 14 ppm / %ABV. Isoamyl alcohol can be comprised between 10 and 60 ppm / %ABV, preferably between 15 and 50 ppm / %ABV, more preferably between 25 and 40 ppm / %ABV. Propanol may be present between 1 and 10 ppm / %ABV, preferably between 2 and 7 ppm / %ABV. Isobutanol may be present in an amount comprised between 10 and 40 ppm / %ABV, preferably between 20 and 35 ppm / %ABV. Table 1 gives a description of the flavour of a selection of flavouring compounds.

**Table 1: flavour description of a selection of flavouring compounds**

| **flavouring compound** | **flavour description** | **preferred contents in conc. precursor (11) ppm** / **%ABV** | **preferred contents in beverage (21) ppm** |
|---|---|---|---|
| ethanol | | 0.5-8 %ABV | 0.01-13 %ABV |
| Isoamyl Acetate (IAAT) | Banana, pear, estery, fruity | 5-40 | 0.05-9 |
| Ethyl Acetate (ETAT) | solvent, fruity | 35-240 | 5-180 |
| phenyl ethyl acetate (PEAT) | Honey, floral, rose | 8-15 | 0.3-7 |
| isoamyl alcohol (IAOH) | Alcohol, fusel oil, solvent | 10-60 | |
| Propanol (PPOH) | Alcohol, ripe fruit, solvent | 1-10 | |
| Isobutanol (iBOH) | Alcohol, solvent, wine-like | 10-40 | |

The concentrated precursor may be blended with water in step (b) of the present process, The full extent of the present invention, however, can be reached by blending the concentrated precursor (11) with a dilution liquor (12) having its own flavours profile which can be modulated at will by blending it with such concentrated precursor. In particular, the dilution liquor may be an alcoholic or non-alcoholic beer or malt based beverage, or a cider. It generally has a rather flat flavours profile which can be enhanced by such blending to create a beverage (21) with a new and appealing flavours profile, in some cases not achievable by direct fermentation. The present invention is not limited to any particular method of producing the dilution liquor. It may be an existing beer or cider of little flavour, or it may be a blend of various existing beers to achieve a certain flavours profile which, combined with the flavours profile of the concentrated precursor, would yield a target profile. The ethanol content of the target beverage can be decreased with respect to the concentrated precursor by using a dilution liquor of lower %ABV or, alternatively -albeit more rarely- it may be increased by the blending. The final beverage (21) may comprise:
(a) Between 0.05- 15.00 ppm isoamyl acetate, preferably between 1.0 and 5.0 ppm, and/or
(b) Between 5.0 and 180.0 ppm ethyl actetate, preferably between 10.0 and 100.0 .0 ppm, and/or
(c) Between 0.3 and 7.0 phenyl ethyl acetate, preferably between 1.0 and 5.0 ppm, and/or

Depending on the nature of the base liquor (1) and dilution liquor (12) used in the present process, the beverage (21) obtained can be an alcoholic or non-alcoholic beer, malt base beverage or cider with an almost infinite range of flavours profiles to explore.

### EXAMPLES

### Base liquor (1)

50 parts solids of a dried malt extract (moisture content of 4 wt.%) was diluted in water at a concentration of 78.1 g / I and contacted with attenuzyme® flex for 2 h at a temperature of 64°C until substantially all sugars were converted into glucose. 50 parts of glucose were then added to this suspension at a concentration of 75.0 g / I, as well as 200 ppb of Zn²⁺. The liquor was pasteurized at a temperature of 105°C during 15 min and decanted to remove trub. The thus obtained base liquor was mixed well before fermentation. Table 2 lists the composition of the base liquor used in the present Example.

### Fermentation and concentrated precursor (11)

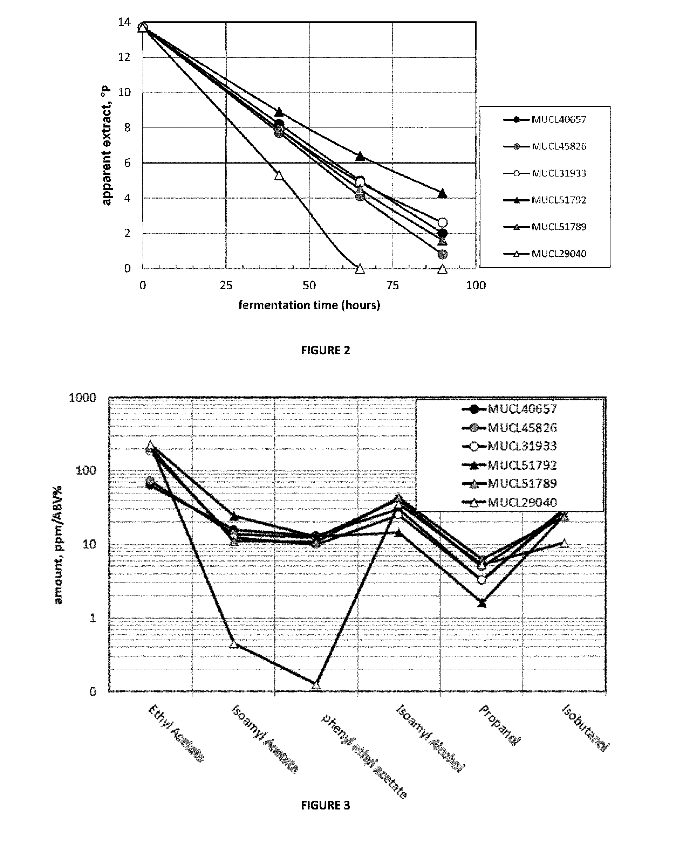

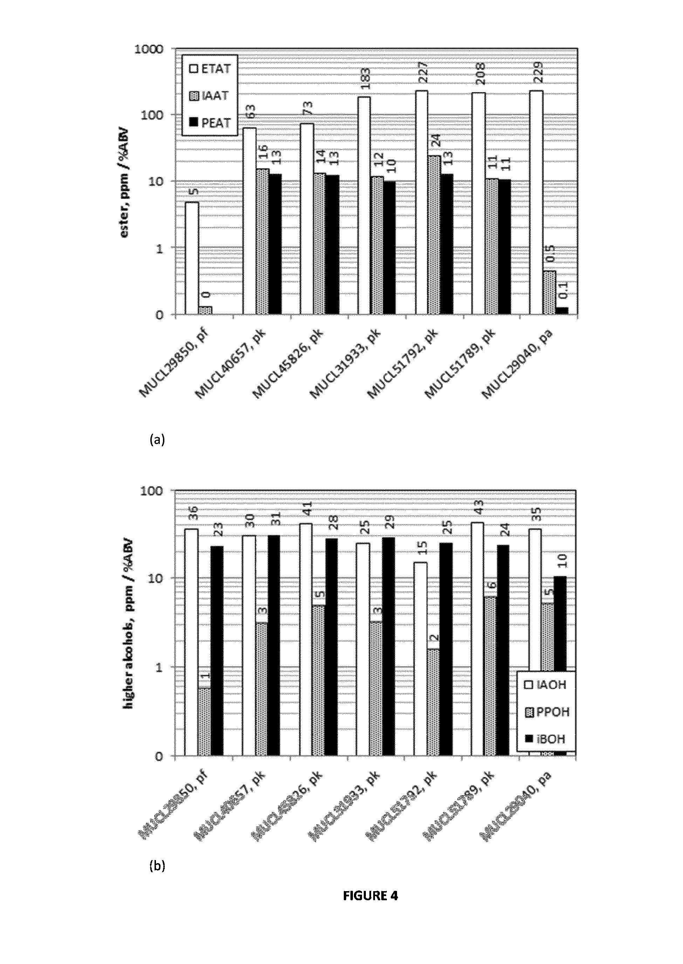

12 ml of propagated *Pichia* yeasts of various genus and types were added to various vessels each containing 238 ml of base liquor (1) leaving 80% headspace filled with air and closed with an untight stopper allowing egress of carbon dioxide and ingress of air. Fermentation was carried out at 20 °C for 90 h in such vessels. In order to create aerobic conditions during the fermentation process, the vessels were mounted on a shaker and vigorously shaken during the whole fermentation stage. Table 3 lists the contents in certain esters and alcohols of the concentrated precursor (11) obtained after 90 h fermentation. Figure 2 shows the time evolution of the apparent extracts, representative of the sugar contents during the fermentation step (a). Figure 3 shows flavours profiles based on the amounts of isoamyl acetate (IAAT), ethyl acetate (ETAT), phenyl ethyl acetate (PEAT), isoamyl alcohol (IAOH), propanol (PPOH), and isobutanol (iBOH) of the concentrated precursors obtained with the yeasts types listed in Table 3. It can be seen that the flavours profiles vary substantially depending on the genus and type of yeast (e.g., compare the profile obtained with *Pichia anomala* MUCL29040 (white triangles) with the profiles obtained with various types of *Pichia kluyveri*; note that the ordinate scale is logarithmic). Figure 4(a)&(b) show in bar diagrams the same data as illustrated in Figure 3 and listed in Table 3.

**Table 2: composition of the base liquor (1)**

| **compound** | | **unit** | **value** |
|---|---|---|---|
| Original Extract | | °P | 13.79 |
| Apparent Extract | | °P | 13.79 |
| Real extract | | | 13.79 |
| pH | | | 5.7 |
| Colour | | | 9 |
| FAN free amino-nitrogen | | ppm | 116 |
| Zn | | ppb | 219 |
| | Fructose | g / 100 ml | 0 |
| | Glucose | g / 100 ml | 12.57 |
| | Saccharose | g / 100 ml | 0.05 |
| | Maltose | g / 100 ml | 0.18 |
| | Maltotriose | g / 100 ml | 0 |
| Maltotetraose | | g / 100 ml | 0 |
| Maltopentaose | | g / 100 ml | 0 |
| Maltohexaose | | g / 100 ml | 0 |
| Maltoheptaose | | g / 100 ml | 0 |
| | Total Sugars | g / 100 ml | 12.9 |

**Table 3: composition of concentrated precursors (11) as a function of yeast genus and type and dilution liquor.**

| **MUCL yeast code** | **ethanol %ABV** | **Ethyl Acetate** | **Isoamyl Acetate** | **phenyl ethyl acetate** | **Isoamyl Alcohol** | **Propanol** | **Isobutanol** |
|---|---|---|---|---|---|---|---|
| | *ml*/*100 ml* | *ppm* | *ppm* | *ppm* | *ppm* | *ppm* | *ppm* |
| CONCENTRATED PRECURSORS | | | | | | | |
| **MUCL40657, pk** | 5.62 | 354 | 88.2 | 73 | 169 | 18 | 175 |
| **MUCL45826, pk** | 6.26 | 456.8 | 86.2 | 78 | 257 | 31 | 177 |
| **MUCL31933, pk** | 5.25 | 959.4 | 64.4 | 52 | 132 | 17 | 153 |
| **MUCL51792, pk** | 4.33 | 981 | 105.1 | 56 | 64 | 7 | 110 |
| **MUCL51789, pk** | 5.75 | 1195.2 | 64.2 | 62 | 247 | 36 | 137 |
| **MUCL29040, pa** | 6.63 | 1519.1 | 3 | 1 | 235 | 35 | 69 |

| **DILUTION LIQUORS** | | | | | | | |
|---|---|---|---|---|---|---|---|
| | *ml*/*100 ml* | *ppm* | *ppm* | *ppm* | *ppm* | *ppm* | *ppm* |
| **Non-alcoholic beer NA-A** | 0.01 | 0.10 | 0.00 | 0.00 | 0.00 | 0.00 | 0.00 |
| **Non-alcoholic beer NA-B** | 0.20 | 0.00 | 0.00 | 0.00 | 1.00 | 0.00 | 0.00 |
| **Non-alcoholic beer NA-C** | 0.36 | 1.0 | 0.00 | 0.00 | 6.00 | 1.00 | 1.00 |
| **Lager beer** | 5.28 | 17.1 | 0.60 | 0.15 | 64.0 | 13.0 | 8.00 |
| **Ale beer** | 6.53 | 34.9 | 2.1 | 0.47 | 55.9 | 23.5 | 8.8 |

| | | | | | | | |
|---|---|---|---|---|---|---|---|
| pk = *pichia kluyveri*; pa = *Pichia anomala.* These acronyms are not part of the MUCL codes. | | | | | | | |

### Dilution liquor (12) and blending

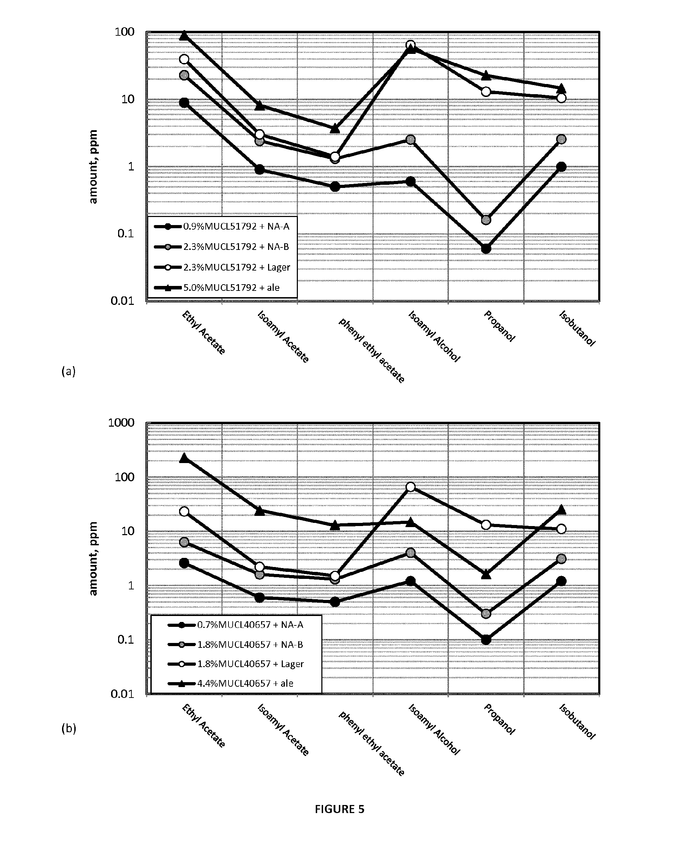

The concentrated precursors (11) listed in Table 3 were blended with a dilution liquor (12) which is a non-alcoholic or alcoholic beer of composition as defined in the lower part of Table 3, Concentrated precursor and diluting liquor were blended to produce various beverages having a target ethanol content <0.05%ABV, <0.5%ABV, 5.3%ABV and 6.4-6.5%ABV respectively. The beverages thus obtained had flavours profiles as listed in Table 4a and 4b and illustrated in Figure 5(a)&(b).

**Table 4a: beverages (21) obtained after blending concentrated precursor MUCL51792 with different dilution liquors (from Table 3)**

| | concentr. precursor | ethanol | Ethyl Acetate | Isoamyl Acetate | phenyl ethyl acetate | Isoamyl Alcohol | Propanol | Isobutanol |
|---|---|---|---|---|---|---|---|---|
| | vol % | % ABV | ppm | ppm | ppm | ppm | ppm | Ppm |
| **MUCL51792 + NA-A** | 0,9% | 0.049 | 8.9 | 0.9 | 0.5 | 0.6 | 0.06 | 0.99 |
| **MUCL51792 + NA-B** | 2,3% | 0.30 | 22.7 | 2.4 | 1.3 | 2.5 | 0.16 | 2.54 |
| **MUCL51792 + Lager beer** | 2,3% | 5.30 | 39.4 | 3.0 | 1.4 | 64.0 | 12.9 | 10.4 |
| **MUCL51792 + Ale beer** | 5,8% | 6.40 | 89.5 | 8.1 | 3.7 | 56.3 | 22.6 | 14.6 |

**Table 4b: beverages (21) obtained after blending concentrated precursor MUCL40657 with different dilution liquors (from Table 3)**

| | concentr. precursor | ethanol %ABV | Ethyl Acetate | Isoamyl Acetate | phenyl ethyl acetate | Isoamyl Alcohol | Propanol | Isobutanol |
|---|---|---|---|---|---|---|---|---|
| | vol % | % ABV | ppm | ppm | ppm | ppm | ppm | Ppm |
| **MUCL40657 + NA-A** | 0,7% | 0.049 | 2.6 | 0.6 | 0.5 | 1.2 | 0.1 | 1.2 |
| **MUCL40657 + NA-B** | 1,8% | 0.30 | 6.3 | 1.6 | 1.3 | 4.0 | 0.3 | 3.1 |
| **MUCL40657 + Lager beer** | 1,8% | 5.29 | 23.1 | 2.2 | 1.5 | 65.9 | 13.1 | 11.0 |
| **MUCL40657 + Ale beer** | 4,4% | 6.49 | 49.0 | 6.0 | 3.7 | 60.9 | 23.3 | 16.2 |

| | | | | | | | | |
|---|---|---|---|---|---|---|---|---|
| pk = *Pichia kluyveri*; pf = *Pichia fermentans*; pa = *Pichia anomala.* These acronyms are not part of the MUCL codes | | | | | | | | |

Figure 5(a)&(b) illustrates the flavours profiles based on the amounts of isoamyl acetate (IAAT), ethyl acetate (ETAT), phenyl ethyl acetate (PEAT), isoamyl alcohol (IAOH), propanol (PPOH), and isobutanol (iBOH) of the blended beverages listed in Tables 4a and 4b. Figure 5(a)&(b) shows that the flavours profiles of the blended beverages can vary substantially by varying the type of dilution liquors (12) used (compare curves in one graph) or by varying the concentrated precursor (11) used (compare curves of Figure 5(a) with the ones of Figure 5(b)). It is clear that more variations can be obtained by varying the amounts of dilution liquors (12) and concentrated precursor (11) added to the blend. Considering that the flavours profiles of the concentrated precursor vary depending on the specific *Pichia* yeast used (cf. Figure 3) and that the dilution liquor may also be selected among any standard beer, such as alcoholic or non-alcoholic lager, ale, or pils beers, it is clear that a person skilled in the art may thus create beverages having a vast variety of flavours profiles, many not being achievable by previously known techniques.

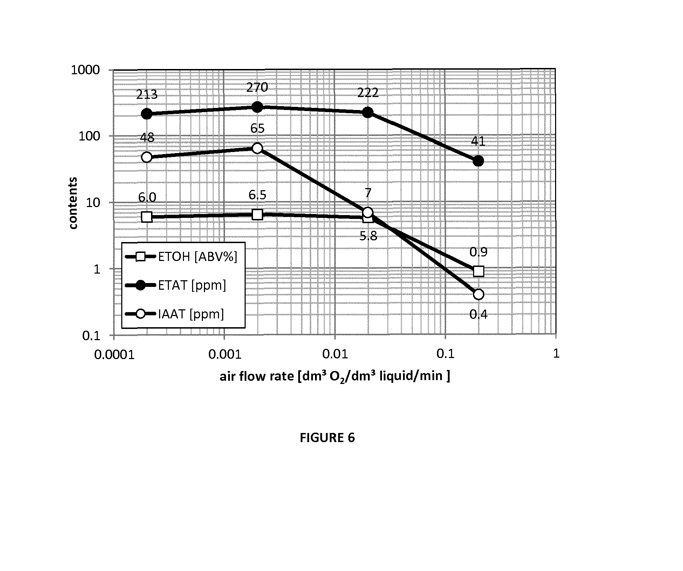

Figure 6 shows the evolution of ethanol (ETOH), ETAT and IAAT concentrations during fermentation of a base liquor consisting of a wort as defined in Table 2 with *Pichia kluyveri* MUCL51792 as a function of air flow rate ranging from 0,0002 to 0.2 dm³ air / dm³ wort / minute. The fermentation process lasted 166 h to yield a concentrated precursos having the contents in IAAT, ETAT, and ETOH indicated in Figure 6. The base liquor was stirred mechanically with an impeller at 50 rpm during the whole fermentation process. It can be seen that the contents in esters and ethanol of the thus obtained concentrated precursor varies substantially as a function of the oxygen feed rate. The maximum amounts of IAAT and ETAT after fermentation with MUCL51792 were obtained with an air feed comprised between 10⁻⁴ and 10⁻² dm³ O₂ / dm³ wort / minute, in particular around 10⁻³ dm³ O₂ / dm³ wort / minute.

In a preferred embodiment, the concentrated precursor (11) can be blended with a dilution liquor (12) which is a beer, such as an ale or a lager, during the fermentation or maturation stages of said beer.

The present invention constitutes a breakthrough in the manner of producing a new range of fermented beverages (21) comprising the blending of a concentrated precursor (11) having an intense flavours profile with a dilution liquor (12) having a rather anonymous and dull flavours profile, or further enhancing the flavour of a beverage and developing an intense/innovative flavour beverage. The process of the present invention opens the door to the creation of beverages having a large variety of tastes, odours, and flavours. Alternatives can be derived from the present invention.

For example, as mentioned in the BACKGROUND ART section, fermentation is the conversion of carbohydrates to alcohols and carbon dioxide, organic acids or esters. The carbohydrates are usually sugars, in particular glucose or other oligo- or polysaccharides. More broadly, however, the carbohydrates may also be alcohols, in particular ethanol, which are transformed into organic acids and esters including IAAT and ETAT, etc. The whole description of the present application would therefore also apply *mutatis mutandis* in case the base liquor contains alcohol, in particular, ethanol, instead of sugar. This would allow the use of an existing beer as base liquor to produce a concentrated precursor with specific flavours profiles particularly adapted for the creation of new beverages by blending with a dilution liquor, as explained supra with respect to the present invention.

As another example, yeasts of the species *Williopsis,* such as *Williopsis mrakii* and *Williopsis saturnus* are also known to produce significant higher levels of isoamyl acetate than *Saccharomyces cerevisiae.* A concentrated precursor may therefore be produced exactly in the same manner as in the present invention by replacing a yeast of the species *Pichia* by a yeast of the species *Williopsis,* such as *Williopsis mrakii* and *Williopsis saturnus* and then blended with a dillution liquor to obtain a beverage. All the process steps described in reference to the present invention using a yeast of the species *Pichia* apply mutatis mutandis to a process using a yeast of the species *Williopsis* instead.

## Claims

1. Process for the production of a beverage (21), said process comprising the following steps:
(a) contacting a base liquor (1) containing at least one fermentable sugar with a yeast (2) of the species *Pichia,* to carry out fermentation under aerobic conditions of said at least one fermentable sugar until a concentrated precursor (11) is formed, comprising an amount of isoamyl acetate (IAAT) of at least 10 ppm, or an amount of ethyl acetate of at least 90 ppm, wherein, unless otherwise indicated, the amounts in ppm are expressed with respect to the total weight of the concentrated precursor;
(b) blending the thus obtained concentrated precursor as such (11) or after further treatment (11 a), with more than 50 vol/% of a dilution liquor (12) to produce said beverage (21) having an IAAT content of at least 0.5 ppm with respect to the total weight of the beverage.

2. Process according to claim 1, wherein the at least one fermentable sugar comprises glucose or fructose, and/or one or more oligosaccharides or polysaccharides selected from the group of, maltose, sucrose, or maltotriose, starch and beta-glucans wherein some of the used one or more oligosacharides is preferably converted into glucose in step (a), preferably, at least 20 wt.%, more preferably at least 50 wt.%, most preferably at least 90 wt.% of the oligosaccharides used is converted into glucose,

3. Process according to claim 2, wherein the base liquor (1) comprises a wort and the beverage (21) is an alcoholic or non-alcoholic beer or malt base beverage.

4. Process according to any of the preceding claims, wherein the concentrated precursor (11) comprises isoamyl acetate in an amount of at least 5 ppm per vol.% ethanol (=ppm / %ABV), preferably in an amount comprised between 6 and 40 ppm / %ABV, more preferably between 8 and 30 ppm / %ABV, most preferably between 10 and 25 ppm / %ABV.

5. Process according to any of the preceding claims, wherein the concentrated precursor (11) comprises,
(a) Ethyl acetate in an amount comprised between 35 and 500 ppm / %ABV, preferably between 45 and 250 ppm / %ABV, and and/or
(b) Phenyl ethyl acetate in an amount comprised between 8 and 15 ppm / %ABV, preferably between 10 and 14 ppm / %ABV, and/or
(c) Ethanol in an amount comprised between 0,05 and 15 vol.%, preferably between 2 and 10 vol.%, more preferably between 4 and 7 vol.%.

6. Process according to any of the preceding claims, wherein the fermentation of the at least one fermentable sugar is carried out under supply of an oxygen containing gas, preferably air, at a flow rate of at least.0.00001 dm³ O₂ / dm³_{liquor} / min, more preferably the flow rate provides an oxygen feed comprised between 0.001 dm³ O₂ / dm³_{liquor} / min, and 10 dm³ O₂ / dm³_{liquor} / min. and preferably under stirred conditions caused by the gas flow or by additional mechanical agitation.

7. Process according to any of the preceding claims, wherein the dilution liquor (12) is water; an alcoholic or non-alcoholic beer, cider or malt based beverage, wherein the blending with the concentrated precursor (11) allows modulation of the flavours profile of the final beverage obtained after blending, and wherein the blending is preferably carried out during the production process of the dilution liquor, such as during a fermentation stage, a maturation stage, before or after a filtration stage of a beer or cider or malt based beverage.

8. Process according to the preceding claim, wherein the concentrated precursor (11) is blended with the dilution liquor (12) in an amount comprised between 0.1 and 49 vol.%, preferably between 0.3 and 30 vol.%, more preferably between 0,4 and 15 vol.%, most preferably between 0,5 and 6 vol.%., with respect to the total volume of concentrated liquor and dilution liquor.

9. Process according to any of the preceding claims wherein the yeast of the species *Pichia* is of the genus *Pichia kluyveri, Pichia anomalia,* or *Pichia fermentans,* preferably *Pichia kluiveri.*

10. Process according to any of the preceding claims, wherein the concentrated precursor obtained at the end of step (a) is distilled and the distillate (11 a) is blended with a dilution liquor (12) in step (b).

11. Concentrated precursor (11) for use with a dilution liquor for forming a beverage, said concentrated precursor being obtained by a process according to step (a) of any of claims 1 to 6, and comprising at least 10 ppm isoamyl acetate with respect to the total weight of the concentrated precursor.

12. Concentrated precursor according to the preceding claim, further comprising:
(a) Isoamyl acetate in an amount of at least 5 ppm per vol.% ethanol (=ppm / %ABV), preferably in an amount comprised between 6 and 40 ppm / %ABV, more preferably between 8 and 30 ppm / %ABV, most preferably between 10 and 25 ppm / %ABV.
(b) Ethyl acetate in an amount comprised between 35 and 240 ppm / %ABV, preferably between 45 and 80 ppm / %ABV, and/or
(c) Phenyl ethyl acetate in an amount comprised between 8 and 15, preferably between 10 and 14 ppm / %ABV, and/or
(d) Ethanol in an amount comprised between 0,5 and 8 vol.%, preferably between 2 and 7 col.%, more preferably between 4 and 6.5 vol.%.

13. Beverage (21) obtained by a process according to any of claims 1 to 9.

14. Beverage according to claim 13 comprising:
(a) Between 0.05- 15.00 ppm isoamyl acetate, preferably between 1.0 and 5.0 ppm, and/or
(b) Between 5.0 and 180.0 ppm ethyl actetate, preferably between 10.0 and 100.0 .0 ppm, and/or
(c) Between 0.3 and 7.0 phenyl ethyl acetate, preferably between 1.0 and 5.0 ppm, and/or
(d) Between 0.01 and 13.0 vol.% ethanol, preferably between 0.03 and 9.0 vol.%.

15. Beverage according to claim 13 or 14, **characterized in that** it is an alcoholic or non-alcoholic beer, malt base beverage or cider.
